# EUROPEAN PATENT APPLICATION

(11) **EP 4 572 203 A1**
(43) Date of publication of application: **18.06.2025**
(21) Application number: 23838832.6
(22) Date of filing: 06.07.2023
(51) Int. Cl.: H04L 5/00

(54) **METHOD AND APPARATUS FOR WIRELESS COMMUNICATION**

(30) Priority: 13.07.2022 CN 202210824602
(71) Applicant: SHANGHAI LANGBO COMMUNICATION TECHNOLOGY COMPANY LIMITED, Shanghai 200240 (CN)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2023/106058
(87) International publication number: WO 2024/012340

(57) **Abstract**

Disclosed in the present application are a method and apparatus for wireless communication. The method comprises: a first node receiving a first reporting configuration; and sending a first CSI set. The first reporting configuration is applied to the first CSI set; the first reporting configuration is used for determining a first CSI resource group and a first frequency-domain resource, wherein the first CSI resource group comprises at least two CSI resources, a measurement on the first CSI resource group being used for calculating the first CSI set; the first reporting configuration is used for configuring CSI reporting for the first frequency-domain resource; for each CSI resource in the first CSI resource group, the first frequency-domain resource comprises at least one PRB through which the CSI resource does not pass; and the PRB through which any CSI resource in the first CSI resource group passes is continuous in the frequency domain. By means of the method, the configuration flexibility of CSI resources is improved, and a relatively good level of compatibility is maintained.

## Description

### Technical Field

The present disclosure relates to a method and an apparatus in a wireless communication system, and in particular, to a Channel State Information (CSI) method and apparatus in a wireless communication system.

### Related Art

In conventional wireless communication, a base station selects an appropriate transmission parameter for a User Equipment (UE) according to CSI reported by the UE, for example, a parameter such as a Modulation and Coding Scheme (MSC), a Transmitted Precoding Matrix Indicator (TPMI), or a Transmission Configuration Indication (TCI). Typical CSI includes, for example, at least one of a CSI-RS Resource Indicator (CRI), a Rank Indicator (RI), a Precoding Matrix Indicator (PMI), or a Channel Quality Indicator (PMI) or Channel Quality Indicator (CQI), Layer 1 reference signal received power (L1-RSRP), and a Layer 1 signal-to-noise and interference ratio (L1-SINR).

To calculate the CSI, the UE is configured with a Channel State Information-Reference Signal (CSI-RS) resource and a Channel State Information-Interference Measurement (CSI-IM) resource. The former is used for channel measurement or interference measurement, and the latter is used for interference measurement. For the CSI-RS resource and the CSI-IM resource, a configured Physical Resource Block (PRB) includes all subbands for which the CSI is targeted.

### SUMMARY

In a New Radio (NR) system, a Subband Full Duplex (SBFD) is proposed. That is, a communication device simultaneously performs a transmitting operation and a receiving operation on two subbands. The inventor finds through research that in an application scenario such as SBFD, an existing solution of the CSI-RS resource or the CSI-IM resource is no longer applicable.

With respect to the foregoing problem, this application discloses a solution. It should be noted that, although an original intention of this application is to provide description for an SBFD scenario, this application is also applicable to a non-SBFD scenario. Further, hardware complexity of interference measurement or signaling overhead can be reduced by using a unified design solution. In the absence of conflict, an embodiment of any node in this application and a feature in the embodiment may be applied to any other node. In the absence of conflict, embodiments of this application and features in the embodiments may be combined with each other arbitrarily.

As an embodiment, the terminology in this application is interpreted with reference to the definitions in the 3GPP TS36 series.

As an embodiment, the terminology in this application is interpreted with reference to the definitions in the 3GPP TS38 series.

As an embodiment, the terminology in this application is interpreted with reference to the definitions in the 3GPP TS37 series.

As an embodiment, the terminology in this application is interpreted with reference to the definitions in specification protocols of the Institute of Electrical and Electronics Engineers (IEEE).

This application discloses a method in a first node used for wireless communication, including:
receiving a first reporting configuration; and
transmitting a first CSI set;
where the first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

As an embodiment, a problem to be resolved in this application includes: a resource configuration associated with a CSI reporting.

As an embodiment, benefits of the foregoing method include: a CSI resource configuration does not need to include all the PRBs of the first frequency-domain resource, thereby improving configuration flexibility.

As an embodiment, the benefits of the foregoing method include: a configuration of CSI resources occupying discontiguous PRBs is prevented, and better compatibility is maintained.

According to one aspect of this application, each CSI resource in the first CSI resource group is a CSI-RS resource, and the measurement on the first CSI resource group is channel measurement.

According to one aspect of this application, the first reporting configuration is used for determining a second CSI resource group, the second CSI resource group including a first CSI-IM resource, PRBs occupied by the first CSI-IM resource are contiguous in the frequency domain, and the PRBs occupied by the first CSI-IM resource include each PRB in the first frequency-domain resource.

According to one aspect of this application, each CSI resource in the first CSI resource group is a CSI-IM resource, and the measurement on the first CSI resource group is interference measurement.

According to one aspect of this application, the first reporting configuration is used for determining a third CSI resource group, the third CSI resource group including a first CSI-RS resource, PRBs across which the first CSI-RS resource passes are contiguous in the frequency domain, and the PRBs across which the first CSI-RS resource passes include each PRB in the first frequency-domain resource.

According to one aspect of this application, PRBs across which any two CSI resources in the first CSI resource group pass do not completely overlap.

According to one aspect of this application, the method includes:
transmitting a first message;
where the first message is used for determining that each CSI resource in the first CSI resource group is configured to pass across only part of the PRBs in the first frequency-domain resource, and the first message is used for indicating a capability of the first node.

As an embodiment, the benefits of the foregoing method include: it is beneficial for the first node to notify, according to a capability thereof, a network device or a peer communication device of whether the configured CSI-RS resource or CSI-IM resource is supported to pass across only part of the PRBs in the frequency-domain resource for which an associated CSI reporting is targeted.

According to one aspect of this application, the first node is a UE.

According to one aspect of this application, the first node is a relay node.

This application discloses a method in a second node used for wireless communication, including:
transmitting a first reporting configuration; and
receiving a first CSI set;
where the first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

According to one aspect of this application, each CSI resource in the first CSI resource group is a CSI-RS resource, and the measurement on the first CSI resource group is channel measurement.

According to one aspect of this application, the first reporting configuration is used for determining a second CSI resource group, the second CSI resource group including a first CSI-IM resource, PRBs occupied by the first CSI-IM resource are contiguous in the frequency domain, and the PRBs occupied by the first CSI-IM resource include each PRB in the first frequency-domain resource.

According to one aspect of this application, each CSI resource in the first CSI resource group is a CSI-IM resource, and the measurement on the first CSI resource group is interference measurement.

According to one aspect of this application, the first reporting configuration is used for determining a third CSI resource group, the third CSI resource group including a first CSI-RS resource, PRBs across which the first CSI-RS resource passes are contiguous in the frequency domain, and the PRBs across which the first CSI-RS resource passes include each PRB in the first frequency-domain resource.

According to one aspect of this application, PRBs across which any two CSI resources in the first CSI resource group pass do not completely overlap.

According to one aspect of this application, the method includes:
receiving a first message;
where the first message is used for determining that each CSI resource in the first CSI resource group is configured to pass across only part of the PRBs in the first frequency-domain resource, and the first message is used for indicating a capability of a sender of the first CSI set.

According to one aspect of this application, the second node is a base station.

According to one aspect of this application, the second node is a UE.

According to one aspect of this application, the second node is a relay node.

This application discloses a first node used for wireless communication, including:
a first receiver receiving a first reporting configuration; and
a first transmitter transmitting a first CSI set;
where the first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

This application discloses a second node used for wireless communication, including:
a second transmitter transmitting a first reporting configuration; and
a second receiver receiving a first CSI set;
where the first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

As an embodiment, compared with the conventional solution, this application has the following advantages:
Configuration flexibility of CSI-RS resources and CSI-IM resources is improved.

Configuration of CSI resources or CSI-IM resources occupying discontiguous PRBs is prevented, and better compatibility is maintained.

### BRIEF DESCRIPTION OF THE DRAWINGS

Other features, objectives, and advantages of this application will become more obvious by reading detailed descriptions of non-limiting embodiments with reference to the following accompanying drawings.
FIG. 1 is a flowchart of a first reporting configuration and a first CSI set according to an embodiment of this application;
FIG. 2 is a schematic diagram of a network architecture according to an embodiment of this application;
FIG. 3 is a schematic diagram of an embodiment of a wireless protocol architecture of a user plane and a control plane according to an embodiment of this application;
FIG. 4 is a schematic diagram of a first communication device and a second communication device according to an embodiment of this application;
FIG. 5 is a flowchart of transmission according to an embodiment of this application;
FIG. 6 is a schematic diagram of a first CSI resource group according to an embodiment of this application;
FIG. 7 is a schematic diagram of a second CSI resource group according to an embodiment of this application;
FIG. 8 is a schematic diagram of a first CSI resource group according to an embodiment of this application;
FIG. 9 is a schematic diagram of a third CSI resource group according to an embodiment of this application;
FIG. 10 is a schematic diagram showing that PRBs across which any two CSI resources in a first CSI resource group pass do not completely overlap according to an embodiment of this application;
FIG. 11 is a schematic diagram of a first message according to an embodiment of this application;
FIG. 12 is a structural block diagram of a processing apparatus used in a first node according to an embodiment of this application; and
FIG. 13 is a structural block diagram of a processing apparatus used in a second node according to an embodiment of this application.

### DETAILED DESCRIPTION

The technical solution of this application will be further described in detail below with reference to the accompanying drawings. It should be noted that, in the absence of conflict, embodiments of this application and features in the embodiments may be combined with each other arbitrarily.

### Embodiment 1

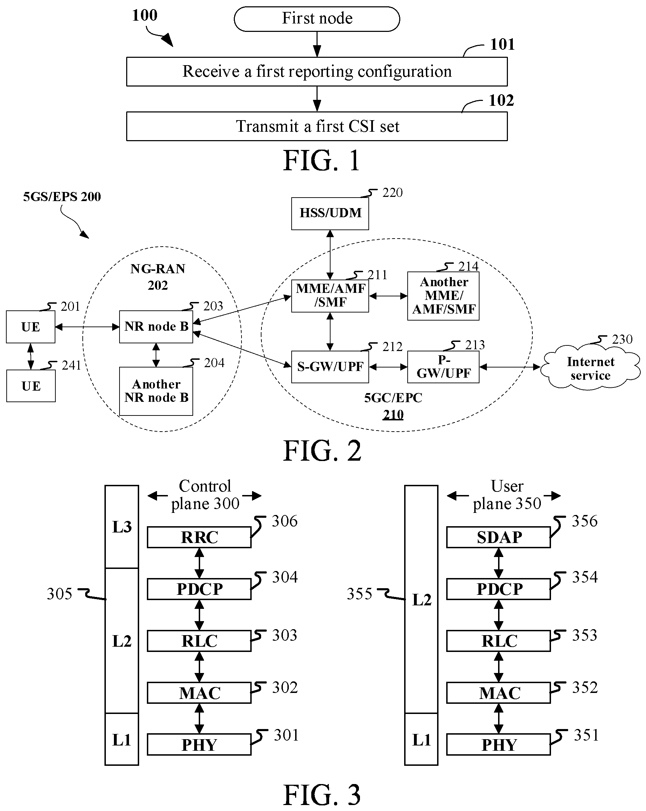

Embodiment 1 illustrates a flowchart of a first reporting configuration and a first CSI set according to an embodiment of this application, as shown in FIG. 1. In 100 shown in FIG. 1, each box represents a step. In particular, the sequence of the steps in the boxes does not indicate a particular time sequence relationship between the steps.

In Embodiment 1, the first node in this application receives a first reporting configuration in step 101; and transmits a first CSI set in step 102. The first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

As an embodiment, the CSI is Channel State Information.

As an embodiment, the PRB is a Physical Resource Block.

As an embodiment, the first reporting configuration is a CSI reporting configuration.

As an embodiment, the first reporting configuration is carried by higher layer signaling.

As an embodiment, the first reporting configuration is carried by Radio Resource Control (RRC) signaling.

As an embodiment, the first reporting configuration is carried by an RRC Information Element (RRC IE).

As an embodiment, the first reporting configuration is an RRC IE.

As an embodiment, the first reporting configuration is an RRC IE, and a name of the first CSI reporting configuration includes "CSI-ReportConfig".

As an embodiment, the first reporting configuration includes information in all or some fields in a CSI-ReportConfig IE.

As an embodiment, the first reporting configuration is a CSI-ReportConfig IE.

As an embodiment, the first reporting configuration is periodic.

As an embodiment, the first reporting configuration is semi-persistent.

As an embodiment, the first reporting configuration is aperiodic.

As an embodiment, the first reporting configuration is identified by a CSI-ReportConfigId.

As an embodiment, the first CSI set includes at least one piece of CSI.

As an embodiment, any piece of CSI in the first CSI set is one of a CQI, a PMI, a CRI, a Layer Indicator (LI), an RI, an SS/PBCH Block Resource Indicator (SSBRI), L1-RSRP, and an L1-SINR.

As an embodiment, any piece of CSI in the first CSI set is one of a CQI, a PMI, a CRI, an LI, an RI, an SSBRI, L1-RSRP, an L1-SINR, a capability index, and a capability set index.

As an embodiment, the first CSI set includes at least one CSI report quantity.

As an embodiment, the CSI report quantity includes the CQI, the PMI, the CRI, the LI, the RI, the SSBRI, the L1-RSRP, and the L1-SINR.

As an embodiment, the CSI report quantity further includes at least one of the capability index and the capability set index.

As an embodiment, the first CSI set includes the RI.

As an embodiment, the first CSI set includes the CRI.

As an embodiment, the first CSI set includes the CQI.

As an embodiment, the first CSI set includes a wideband CQI.

As an embodiment, the first CSI set includes at least one subband CQI.

As an embodiment, the first CSI set includes the PMI.

As an embodiment, the first CSI set is one CSI reporting for the first reporting configuration.

As an embodiment, the first CSI set includes all CSI report quantities reported by the first node in one CSI reporting for the first reporting configuration.

As an embodiment, "the first reporting configuration is applied to the first CSI set" means that: the first reporting configuration is used for determining an RS resource group used for obtaining channel measurement for calculating the first CSI set.

As an embodiment, "the first reporting configuration is applied to the first CSI set" means that: the first reporting configuration is used for determining a resource group used for obtaining interference measurement for calculating the first CSI set.

As a sub-embodiment of the foregoing embodiment, the resource group includes at least one of a CSI-RS resource and a CSI-IM resource.

As an embodiment, "the first reporting configuration is applied to the first CSI set" means that: the first reporting configuration is used for indicating which CSI report quantities are included in the first CSI set.

As an embodiment, "the first reporting configuration is applied to the first CSI set" means that: the first reporting configuration is used for indicating frequency-domain resources for which the first CSI set is targeted.

As an embodiment, "the first reporting configuration is applied to the first CSI set" means that: the first reporting configuration indicates values of some or all of higher-layer parameters in higher-layer parameters corresponding to the first CSI set "resourcesForChannelMeasurement", "csi-IM-ResourcesForInterference", "reportQuantity", "nzp-CSI-RS-ResourcesForInterference", "reportConfigType", "reportFreqConfiguration", "timeRestrictionForChannelMeasurements", "timeRestrictionForInterferenceMeasurements", "subbandSize", and "codebookConfig".

As an embodiment, any CSI resource in the first CSI resource group includes a CSI-RS resource.

As an embodiment, any CSI resource in the first CSI resource group is a CSI-RS resource.

As an embodiment, any CSI resource in the first CSI resource group is a Non-Zero-Power (NZP) CSI-RS resource.

As an embodiment, the first CSI resource group includes a CSI resource which is a CSI-RS resource.

As an embodiment, the first CSI resource group includes a CSI resource which is an NZP CSI-RS resource.

As an embodiment, the first CSI resource group includes a CSI resource which is a Synchronisation Signal/Physical Broadcast Channel (SS/PBCH) Block resource.

As an embodiment, any CSI resource in the first CSI resource group is an SS/PBCH Block resource.

As an embodiment, any CSI resource in the first CSI resource group includes a CSI-IM resource.

As an embodiment, any CSI resource in the first CSI resource group is a CSI-IM resource.

As an embodiment, the first CSI resource group includes a CSI resource which is a CSI-IM resource.

As an embodiment, a quantity of CSI resources included in the first CSI resource group is equal to 2.

As an embodiment, the quantity of CSI resources included in the first CSI resource group is greater than 2.

As an embodiment, one CSI-RS resource is identified by an NZP-CSI-RS-ResourceId.

As an embodiment, one CSI-RS resource is configured by an NZP-CSI-RS-Resource IE.

As an embodiment, one CSI-RS resource includes at least one CSI-RS port.

As an embodiment, one CSI-IM resource is identified by a CSI-IM-ResourceId.

As an embodiment, one CSI-IM resource is configured by a CSI-IM-Resource IE.

As an embodiment, any CSI resource in the first CSI resource group is a CSI-RS resource, and any two different CSI resources in the first CSI resource group are identified by two different NZP-CSI-RS-ResourceIds.

As an embodiment, the first CSI resource group includes a CSI-RS resource set.

As an embodiment, the first CSI resource group is a CSI-RS resource set.

As an embodiment, any CSI resource in the first CSI resource group is a CSI-RS resource, and all the CSI resources in the first CSI resource group belong to a same CSI-RS resource set.

As an embodiment, the first CSI resource group includes at least two CSI-RS resource sets.

As an embodiment, any CSI resource in the first CSI resource group is a CSI-RS resource, and the first CSI resource group includes two CSI resources respectively belonging to two different CSI-RS resource sets.

As a sub-embodiment of the foregoing embodiment, the two different CSI-RS resource sets are respectively identified by different NZP-CSI-RS-ResourceSetIds.

As a sub-embodiment of the foregoing embodiment, the two different CSI-RS resource sets include a same quantity of CSI-RS resources.

As an embodiment, the first CSI resource group includes at least two CSI-RS resource sets, and any two CSI resource sets in the first CSI resource group include a same quantity of CSI-RS resources.

As an embodiment, one CSI-RS resource set is identified by an NZP-CSI-RS-ResourceSetId.

As an embodiment, one CSI-RS resource set is configured by an NZP-CSI-RS-ResourceSet IE.

As an embodiment, one CSI-RS resource set includes at least one CSI-RS resource.

As an embodiment, any CSI resource in the first CSI resource group is a CSI-IM resource, and any two different CSI resources in the first CSI resource group are identified by two different CSI-IM-ResourceIds.

As an embodiment, the first CSI resource group includes a CSI-IM resource set.

As an embodiment, the first CSI resource group is a CSI-IM resource set.

As an embodiment, any CSI resource in the first CSI resource group is a CSI-IM resource, and all the CSI resources in the first CSI resource group belong to a same CSI-IM resource set.

As an embodiment, the first CSI resource group includes at least two CSI-IM resource sets.

As an embodiment, any CSI resource in the first CSI resource group is a CSI-IM resource, and the first CSI resource group includes two CSI resources respectively belonging to two different CSI-IM resource sets.

As a sub-embodiment of the foregoing embodiment, the two different CSI-IM resource sets are respectively identified by different CSI-IM-ResourceSetIds.

As a sub-embodiment of the foregoing embodiment, the two different CSI-IM resource sets include a same quantity of CSI-IM resources.

As an embodiment, the first CSI resource group includes at least two CSI-IM resource sets, and any two CSI-IM resource sets in the first CSI resource group include a same quantity of CSI-IM resources.

As an embodiment, one CSI-IM resource set is identified by a CSI-IM-ResourceId.

As an embodiment, one CSI-IM resource set is configured by a CSI-IM-Resource IE.

As an embodiment, one CSI-IM resource set includes at least one CSI-IM resource.

As an embodiment, the first CSI resource group includes at least one CSI resource set; any of the at least one CSI resource set includes at least one CSI resource, and any of the at least one CSI resource set is a CSI-RS resource set or a CSI-IM resource set.

As a sub-embodiment of the foregoing embodiment, any of the at least one CSI resource set is a CSI-RS resource set, and any CSI resource in any of the at least one CSI resource set is a CSI-RS resource.

As a sub-embodiment of the foregoing embodiment, any of the at least one CSI resource set is a CSI-IM resource set, and any CSI resource in any of the at least one CSI resource set is a CSI-IM resource.

As a sub-embodiment of the foregoing embodiment, the first CSI resource group includes only 1 CSI resource set.

As a sub-embodiment of the foregoing embodiment, the first CSI resource group includes a plurality of CSI resource sets.

As an embodiment, the measurement on the first CSI resource group includes: measurement on a signal transmitted in each CSI resource in the first CSI resource group.

As an embodiment, the measurement on the first CSI resource group includes: measurement on a Reference Signal (RS) transmitted in each CSI resource in the first CSI resource group.

As an embodiment, the measurement on the first CSI resource group includes: measurement on a signal transmitted in at least one CSI resource in the first CSI resource group.

As an embodiment, the measurement on the first CSI resource group includes: measurement on an RS transmitted in at least one CSI resource in the first CSI resource group.

As an embodiment, the measurement on the first CSI resource group is used for calculating each piece of CSI in the first CSI set.

As an embodiment, the measurement on the first CSI resource group is used for calculating each CSI report quantity in the first CSI set.

As an embodiment, the measurement on the first CSI resource group is used for calculating at least one piece of CSI in the first CSI set.

As an embodiment, the measurement on the first CSI resource group is used for calculating at least one CSI report quantity in the first CSI set.

As an embodiment, measurement on each CSI resource in the first CSI resource group is used for calculating the first CSI set.

As an embodiment, measurement on at least one CSI resource in the first CSI resource group is used for calculating the first CSI set.

As an embodiment, the measurement on the first CSI resource group is channel measurement.

As an embodiment, the first node obtains, based on the first CSI resource group, channel measurement used for calculating the first CSI set.

As an embodiment, the first node obtains, based on each CSI resource in the first CSI resource group, channel measurement used for calculating the first CSI set.

As an embodiment, the first node obtains, based on at least one CSI resource in the first CSI resource group, channel measurement used for calculating the first CSI set.

As an embodiment, the first node obtains, based on only part of the CSI resources in the first CSI resource group, channel measurement used for calculating the first CSI set.

As an embodiment, the first CSI resource group includes a plurality of CSI resource sets, and the first node obtains, based on only part of the plurality of CSI resource sets, channel measurement used for calculating the first CSI set.

As an embodiment, the first node obtains, based on only the first CSI resource group, channel measurement used for calculating the first CSI set.

As an embodiment, the measurement on the first CSI resource group is interference measurement.

As an embodiment, the first node obtains, based on the first CSI resource group, interference measurement used for calculating the first CSI set.

As an embodiment, the first node obtains, based on each CSI resource in the first CSI resource group, interference measurement used for calculating the first CSI set.

As an embodiment, the first node obtains, based on at least one CSI resource in the first CSI resource group, interference measurement used for calculating the first CSI set.

As an embodiment, the first node obtains, based on only part of the CSI resources in the first CSI resource group, interference measurement used for calculating the first CSI set.

As an embodiment, the first CSI resource group includes a plurality of CSI resource sets, and the first node obtains, based on only part of the plurality of CSI resource sets, interference measurement used for calculating the first CSI set.

As an embodiment, the first node obtains, based on only the first CSI resource group, interference measurement used for calculating the first CSI set.

As an embodiment, each CSI resource in the first CSI resource group is a CSI-RS resource, and the measurement on the first CSI resource group is interference measurement.

As an embodiment, each CSI resource in the first CSI resource group is a CSI-IM resource, and the measurement on the first CSI resource group is interference measurement.

As an embodiment, the first CSI resource group includes a CSI resource which is a CSI-IM resource, the first CSI resource group includes another CSI resource which is a CSI-RS resource, and the measurement on the first CSI resource group is interference measurement.

As an embodiment, each CSI resource in the first CSI resource group is a CSI-RS resource, and the measurement on the first CSI resource group is channel measurement.

As an embodiment, PRBs across which any CSI resource in the first CSI resource group passes are configured by a higher-layer parameter.

As an embodiment, PRBs across which any CSI resource in the first CSI resource group passes are configured by a higher-layer parameter of the CSI resource.

As an embodiment, PRBs across which any CSI resource in the first CSI resource group passes are configured by a higher-layer parameter "CSI-FrequencyOccupation".

As an embodiment, all PRBs across which any CSI resource in the first CSI resource group passes are contiguous in a frequency domain.

As an embodiment, each CSI resource in the first CSI resource group is a CSI-RS resource; for any given CSI resource in the first CSI resource group, if density of the given CSI resource is no less than 1, PRBs occupied by the given CSI resource are PRBs across which the given CSI resource passes; and if the density of the given CSI resource is 0.5, the given CSI resource occupies all odd PRBs or even PRBs in the PRBs across which the given CSI resource passes.

As a sub-embodiment of the foregoing embodiment, if the density of the given CSI resource is 0.5, the given CSI resource occupies only the odd PRBs in the PRBs across which the given CSI resource passes, or the given CSI resource occupies only the even PRBs in the PRBs across which the given CSI resource passes.

As an embodiment, each CSI resource in the first CSI resource group is a CSI-IM resource; and for any given CSI resource in the first CSI resource group, PRBs occupied by the given CSI resource are PRBs across which the given CSI resource passes.

As a sub-embodiment of the foregoing embodiment, the given CSI resource occupies all the PRBs across which the given CSI resource passes.

As an embodiment, each CSI resource in the first CSI resource group is an SS/PBCH Block resource; and for any given CSI resource in the first CSI resource group, PRBs occupied by the given CSI resource are PRBs across which the given CSI resource passes.

As an embodiment, the PRB in this application includes 12 consecutive subcarriers in the frequency domain.

As an embodiment, density of one CSI-RS resource is frequency-domain density of the CSI-RS resource.

As an embodiment, density of one CSI-RS resource is a quantity of Resource Elements (REs) occupied by the CSI-RS resource per PRB per port.

As an embodiment, density of one CSI-RS resource is indicated by CSI-RS-ResourceMapping configuring the CSI-RS resource.

As an embodiment, density of one CSI-RS resource is indicated by a density field in CSI-RS-ResourceMapping configuring the CSI-RS resource.

The PRB in this application is sometimes also referred to as a Resource Block (RB).

As an embodiment, the port in this application includes a CSI-RS port.

As an embodiment, the port in this application includes an antenna port.

As an embodiment, the first reporting configuration indicates the first CSI resource group.

As an embodiment, the first reporting configuration includes a second higher-layer parameter, the second higher-layer parameter being used for determining the first CSI resource group.

As an embodiment, the measurement on the first CSI resource group includes channel measurement, and the second higher-layer parameter is "resourcesForChannelMeasurement".

As an embodiment, the measurement on the first CSI resource group includes interference measurement, and the second higher-layer parameter is "csi-IM-ResourcesForInterference" or "nzp-CSI-RS-ResourcesForInterference".

As an embodiment, the first reporting configuration indicates Q1 CSI resources, and any CSI resource in the first CSI resource group is one of the Q1 CSI resources; Q1 is greater than a quantity of the CSI resources included in the first CSI resource group; and a first information block is used for determining the first CSI resource group from the Q1 CSI resources.

As a sub-embodiment of the foregoing embodiment, the second higher-layer parameter indicates the Q1 CSI resources.

As a sub-embodiment of the foregoing embodiment, the first information block is used for determining each CSI resource in the first CSI resource group from the Q1 CSI resources.

As a sub-embodiment of the foregoing embodiment, the first information block indicates the first CSI resource group from the Q1 CSI resources.

As a sub-embodiment of the foregoing embodiment, any of the Q1 CSI resources is a CSI-RS resource or a CSI-IM resource.

As an embodiment, the first CSI resource group includes two different CSI resource sets; the first reporting configuration indicates Q2 CSI resource sets, where Q2 is a positive integer greater than 2, and the two different CSI resource sets are respectively one of the Q2 CSI resource sets; and the first information block is used for determining the two different CSI resource sets from the Q2 CSI resource sets.

As a sub-embodiment of the foregoing embodiment, the CSI resource set is a CSI-RS resource set or a CSI-IM resource set.

As a sub-embodiment of the foregoing embodiment, the first information block indicates the two different CSI resource sets from the Q2 CSI resource sets.

As an embodiment, the first information block is carried by an IE.

As an embodiment, the first information block is carried by a CSI-AperiodicTriggerStateList IE.

As an embodiment, the first information block indicates a CSI triggering state corresponding to the first reporting configuration.

As an embodiment, the first reporting configuration indicates the first frequency-domain resource.

As an embodiment, the first reporting configuration includes a first higher-layer parameter, the first higher-layer parameter indicating the first frequency-domain resource.

As an embodiment, a name of the first higher-layer parameter includes "reportFreqConfiguration".

As an embodiment, the first higher-layer parameter is "reportFreqConfiguration".

As an embodiment, the name of the first higher-layer parameter includes "csi-ReportingBand".

As an embodiment, the first higher-layer parameter is "csi-ReportingBand".

As an embodiment, the first frequency-domain resource includes at least one subband.

As an embodiment, the first frequency-domain resource includes at least one PRB.

As an embodiment, the first frequency-domain resource includes at least one subband in a first Bandwidth Part (BWP).

As an embodiment, the first frequency-domain resource includes a plurality of subbands, the plurality of subbands being contiguous in the frequency domain.

As an embodiment, the first frequency-domain resource includes a plurality of subbands, the plurality of subbands being discontiguous in the frequency domain.

As an embodiment, one subband includes one or more PRBs contiguous in the frequency domain.

As an embodiment, except for a subband at an edge of the first BWP, other subbands in the first frequency-domain resource include a same quantity of PRBs.

As an embodiment, except for the subband at the edge of the first BWP, the quantity of PRBs included in the other subbands in the first frequency-domain resource increases as a bandwidth of the first BWP increases.

As an embodiment, except for the subband at the edge of the first BWP, the quantity of PRBs included in any subband in the first frequency-domain resource is P1, where P1 is a positive integer greater than 1.

As an embodiment, P1 is a positive integer multiple of 4.

As an embodiment, P1 is one of 4, 8, 16, and 32.

As an embodiment, P1 is indicated by higher layer signaling.

As an embodiment, P1 is related to a quantity of PRBs included in the first BWP.

As an embodiment, if the first frequency-domain resource includes a starting subband in the first BWP, and a quantity of PRBs included in the starting subband is P1-(Ns mod P1); if the first frequency-domain resource includes the last subband in the first BWP, a quantity of PRBs included in the last subband is (Ns + Nw) mod P1 or P1, where Ns is an index of a starting PRB in the first BWP, and Nw is the quantity of PRBs included in the first BWP.

As an embodiment, a subcarrier spacing corresponding to one PRB or one subband is fixed.

As an embodiment, the subcarrier spacing corresponding to one PRB or one subband varies with a frequency range to which the first frequency-domain resource belongs.

As an embodiment, the subcarrier spacing corresponding to one PRB or one subband is a subcarrier spacing of the first BWP.

As an embodiment, a quantity of subbands included in the first BWP is no more than 18.

It should be noted that, unless particularly emphasized, a subband indicated by the first reporting configuration and a "subband" in the SBFD are independent of each other, and the latter is a relatively broad concept and is under discussion.

As an embodiment, a frequency-domain resource for which any piece of CSI reported by the first node for the first reporting configuration is targeted belongs to the first frequency-domain resource.

As an embodiment, a frequency-domain resource for which the first CSI set is targeted belongs to the first frequency-domain resource.

As an embodiment, the frequency-domain resource for which the first CSI set is targeted is the first frequency-domain resource.

As an embodiment, a frequency-domain resource for which any CSI in the first CSI set is targeted belongs to the first frequency-domain resource.

As an embodiment, the first CSI set includes one piece of CSI which is broadband, that is, for all subbands in the first frequency-domain resource.

As an embodiment, the first CSI set includes one piece of CSI which is for a subband, that is, for only one subband in the first frequency-domain resource.

As an embodiment, "one piece of CSI is targeted for one frequency-domain resource (or one subband)" means that: the piece of CSI reflects channel quality on the frequency-domain resource (or the subband).

As an embodiment, "one piece of CSI is targeted for one frequency-domain resource (or one subband)" means that: channel measurement and interference measurement on the frequency-domain resource (or the subband) are used for calculating the piece of CSI.

As an embodiment, "one piece of CSI is targeted for one frequency-domain resource (or one subband)" means that: assuming that a Transport Block (TB) is transmitted on the frequency-domain resource (or the subband), the piece of CSI indicates a modulation and coding scheme needed by the TB to obtain a Blocking Error Rate (BLER) no higher than a specific BLER.

As a sub-embodiment of the foregoing embodiment, the specific BLER is 0.1 or 0.00001.

As an embodiment, "one piece of CSI is targeted for one frequency-domain resource (or one subband)" means that: a frequency-domain resource occupied by a CSI reference resource of the piece of CSI is the frequency-domain resource (or the subband).

As an embodiment, "a CSI reporting is targeted for one frequency-domain resource (or one subband)" means that: a frequency-domain resource for which any piece of CSI included in the CSI reporting is targeted belongs to the frequency-domain resource (or the subband).

As an embodiment, the first reporting configuration is used for configuring a CSI report quantity included in the CSI reporting for the first frequency-domain resource.

As an embodiment, the first reporting configuration is used for configuring an RS resource group for generating channel measurement on the CSI reporting for the first frequency-domain resource.

As an embodiment, the first reporting configuration is used for configuring a resource group for generating interference measurement on the CSI reporting for the first frequency-domain resource.

As a sub-embodiment of the foregoing embodiment, the resource group includes a CSI-RS resource or a CSI-IM resource.

As an embodiment, the first reporting configuration is used for configuring a time-domain behavior of the CSI reporting for the first frequency-domain resource.

As an embodiment, the time-domain behavior includes periodic, semi-persistent, and aperiodic behaviors.

As an embodiment, the first reporting configuration is used for configuring a period of the CSI reporting for the first frequency-domain resource.

As an embodiment, the first reporting configuration is used for configuring a Physical Uplink Control Channel (PDCCH) resource used for transmitting the CSI reporting for the first frequency-domain resource.

As an embodiment, the first reporting configuration is used for configuring values of some or all of higher-layer parameters in higher-layer parameters of the CSI reporting for the first frequency-domain resource "resourcesForChannelMeasurement", "csi-IM-ResourcesForInterference", "reportQuantity", "nzp-CSI-RS-ResourcesForInterference", "reportConfigType", "timeRestrictionForChannelMeasurements", "timeRestrictionForInterferenceMeasurements", "subbandSize", and "codebookConfig".

As an embodiment, the first CSI set includes CSI reported in one CSI reporting for the first frequency-domain resource.

As an embodiment, the first CSI set is formed by CSI reported in one CSI reporting for the first frequency-domain resource.

As an embodiment, for each CSI resource in the first CSI resource group, at least one PRB included in the first frequency-domain resource does not belong to PRBs across which the CSI resource passes.

As an embodiment, for each CSI resource in the first CSI resource group, at least one PRB included in the first frequency-domain resource belongs to PRBs across which the CSI resource passes.

As an embodiment, for each CSI resource in the first CSI resource group, one part of PRBs included in the first frequency-domain resource belong to PRBs across which the CSI resource passes, and the other part of PRBs included in the first frequency-domain resource do not belong to the PRBs across which the CSI resource passes.

As an embodiment, "the first frequency-domain resource includes at least one PRB that does not belong to the PRBs across which the CSI resource passes" means that: each CSI resource in the first CSI resource group is a CSI-RS resource; and the first frequency-domain resource includes a given subband, and for any given CSI resource in the first CSI resource group, density of the given CSI resource per PRB per port in the given subband is less than density at which the given CSI resource is configured.

As an embodiment, "the first frequency-domain resource includes at least one PRB that does not belong to the PRBs across which the CSI resource passes" means that: each CSI resource in the first CSI resource group is a CSI-IM resource; and the first frequency-domain resource includes a given subband, and for any given CSI resource in the first CSI resource group, the given subband includes a PRB in which the given CSI resource does not appear.

As an embodiment, the first CSI resource group includes K CSI resources, where K is a positive integer greater than 1; and the K CSI resources respectively pass through K frequency-domain resources, and a union set of the K frequency-domain resources includes the first frequency-domain resource.

As a sub-embodiment of the foregoing embodiment, K is equal to 2.

As a sub-embodiment of the foregoing embodiment, K is greater than 2.

As a sub-embodiment of the foregoing embodiment, any of the K frequency-domain resources includes at least one subband.

As a sub-embodiment of the foregoing embodiment, any of the K frequency-domain resources includes at least one PRB.

As a sub-embodiment of the foregoing embodiment, any PRB in the first frequency-domain resource belongs to at least one of the K frequency-domain resources.

As a sub-embodiment of the foregoing embodiment, the union set of the K frequency-domain resources includes any PRB in any of the K frequency-domain resources.

As a sub-embodiment of the foregoing embodiment, for any PRB, when and only when the PRB belongs to one of the K frequency-domain resources, the PRB belongs to the union set of the K frequency-domain resources.

As a sub-embodiment of the foregoing embodiment, all the PRBS in the union set of the K frequency-domain resources are pairwise different from each other.

As a sub-embodiment of the foregoing embodiment, all the PRBS in the K frequency-domain resources are contiguous in the frequency domain.

As an embodiment, PRBs across which one CSI resource passes are PRBs configured for the CSI resource.

As an embodiment, PRBs across which one CSI resource passes are PRBs configured by a higher-layer parameter for the CSI resource.

As an embodiment, PRBs across which one CSI resource passes are PRBs configured by an IE configuring the CSI resource.

As an embodiment, PRBs across which one CSI resource passes are PRBs configured by a "freqBand" field of an IE configuring the CSI resource.

As an embodiment, PRBs across which one CSI resource passes are PRBs configured by a higher-layer parameter "CSI-FrequencyOccupation" for the CSI resource.

As an embodiment, PRBs across which one CSI resource passes are determined by a starting PRB and a quantity of PRBs configured by a higher-layer parameter for the CSI resource.

Generally, how to calculate the CSI is determined by a hardware equipment manufacturer. A non-limiting implementation is described below by using a CQI as an example:
The first node first performs channel measurement on a CSI-RS resource to obtain a channel parameter matrix ***H***_{*r*×}*ₜ,* where r and t are respectively a quantity of receiving antennas and a quantity of antenna ports for transmission; when a precoding matrix ***W***_{*t*×*l*} is used, a precoded channel parameter matrix is ***H***_{*r*×}*ₜ ·**W***_{*t*×}*ₗ,* where *l* is a rank or a number of layers; an equivalent channel capacity of ***H***_{*r*×}*ₜ ·**W***_{*t*×*l*} is calculated by using a criterion, for example, a signal-to-noise and interference ratio (SINR), Exponential Effective SINR Mapping (EESM), or a Received Block mean mutual Information Ratio (RBIR), and then the CQI is determined by the equivalent channel capacity in a manner such as table lookup. Generally, calculation of the equivalent channel capacity requires the first node to estimate noise and interference. The measurement on the first CSI resource group is used for estimating the channel parameter matrix ***H***_{*r*×}*ₜ,* or used for estimating at least the former of interference and noise. Generally, direct mapping from the equivalent channel capacity to a value of the CQI depends on a hardware-related factor such as receiver performance or a modulation mode. The precoding matrix ***W***_{*r*×*l*} is generally fed back by the first node by using the RI or the PMI.

Compared with the CQI, the L1-SINR does not carry information of a receiver, and therefore the calculation of the equivalent channel capacity is omitted.

### Embodiment 2

Embodiment 2 illustrates a schematic diagram of a network architecture according to an embodiment of this application, as shown in FIG. 2.

FIG. 2 illustrates a network architecture 200 of Long-Term Evolution (LTE), Long-Term Evolution Advanced (LTE-A), and future 5G systems. The network architecture 200 of the LTE, LTE-A, and future 5G systems is referred to as an evolved packet system (EPS) 200. A 5G NR or LTE network architecture 200 may be referred to as a 5G System (5GS)/EPS 200 or another suitable term. The 5GS/EPS 200 may include one or more UEs 201, a UE241 performing Sidelink communication with the UE201, a next generation radio access network (NG-RAN) 202, a 5G CoreNetwork (5GC)/an Evolved Packet Core (EPC) 210, a Home Subscriber Server (HSS)/Unified Data Management (UDM) 220, and an Internet service 230. The 5GS/EPS 200 may be interconnected to another access network, but for simplicity, these entities/interfaces are not shown. As shown in FIG. 2, the 5GS/EPS 200 provides a packet switching service. However, a person skilled in the art will easily understand that various concepts presented throughout this application may be extended to a network that provides a circuit switching service. The NG-RAN 202 includes an NR node B (gNB) 203 and another gNB204. The gNB203 provides termination of user and control plane protocols towards the UE201. The gNB 203 may be connected to another gNB204 by using an Xn interface (e.g., backhaul). The gNB203 may alternatively be referred to as a base station, a base transceiver station, a radio base station, a radio transceiver, a transceiver function, a basic service set (BSS), an extended service set (ESS), a transmit-receive point (TRP), or another suitable term. The gNB203 provides the UE201 with an access point to the 5GC/EPC 210. An example of the UE201 includes a cellular phone, a smart phone, a session initiation protocol (SIP) phone, a laptop computer, a personal digital assistant (PDA), a satellite radio, a global positioning system, a multimedia apparatus, a video apparatus, a digital audio player (e.g., an MP3 player), a camera, a game console, an unmanned aerial vehicle, an aircraft, a narrowband physical network device, a machine type communication device, a land vehicle, an automobile, a wearable device, or any other apparatuses having similar functions. A person skilled in the art may alternatively refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable term. The gNB 203 is connected to the 5GC/EPC 210 by using an S1/NG interface. The 5GC/EPC 210 includes a Mobility Management Entity (MM)/Authentication Management Field (AMF)/Session Management Function (SMF) 211, another MM/AMF/SMF 214, a Service Gateway (S-GW)/a User Plane Function (UPF) 212, and a Packet Data Network Gateway (P-GW)/UPF 213. The MME/AMF/SMF 211 is a control node that processes signaling between the UE201 and the 5GC/EPC 210. Generally, the MME/AMF/SMF 211 provides bearer and connection management. All user Internet Protocol (IP) packets are transmitted by using the S-GW/UPF 212, and the S-GW/UPF 212 is connected to the P-GW/UPF 213. The P-GW provides UE IP address allocation and other functions. The P-GW/UPF 213 is connected to the Internet service 230. The Internet service 230 includes IP services corresponding to operators, and may specifically include Internet, Intranet, an IP Multimedia Subsystem (IMS), and packet switching services.

As an embodiment, the first node in this application includes the UE201.

As an embodiment, the second node in this application includes the gNB203.

As an embodiment, a wireless link between the UE201 and the gNB203 includes a cellular network link.

As an embodiment, a transmitter of the first reporting configuration includes the gNB203.

As an embodiment, a receiver of the first reporting configuration includes the UE201.

As an embodiment, a transmitter of the first CSI set includes the UE201.

As an embodiment, a receiver of the first CSI set includes the gNB203.

As an embodiment, a transmitter of the first message includes the UE201.

As an embodiment, a receiver of the first message includes the gNB203.

As an embodiment, the UE201 supports a more flexible duplex mode or full duplex mode.

As an embodiment, the UE201 supports a subband full duplex mode.

As an embodiment, the gNB203 supports a more flexible duplex mode or full duplex mode.

As an embodiment, the gNB203 supports a subband full duplex mode.

### Embodiment 3

Embodiment 3 illustrates a schematic diagram of an embodiment of a wireless protocol architecture of a user plane and a control plane according to an embodiment of this application, as shown in FIG. 3.

Embodiment 3 illustrates a schematic diagram of an embodiment of a wireless protocol architecture of a user plane and a control plane according to this application, as shown in FIG. 3. FIG. 3 is a schematic diagram of an embodiment of a radio protocol architecture for a user plane 350 and a control plane 300. In FIG. 3, a radio protocol architecture for the control plane 300 between a first communication node device (a UE, a gNB, or an RSU in V2X) and a second communication node device (a gNB, a UE, or an RSU in V2X) or between two UEs is illustrated by using three layers, which are a layer 1, a layer 2 and a layer 3, respectively. The layer 1 (L1 layer) is the lowest layer and implements signal processing functions of various physical layers (PHYs). The L1 layer is referred to as a PHY 301 herein. The layer 2 (L2 layer) 305 is above the PHY 301, and is responsible for a link between the first communication node device and the second communication node device or between two UEs. The L2 layer 305 includes a Medium Access Control (MAC) sublayer 302, a Radio Link Control (RLC) sublayer 303, and a Packet Data Convergence Protocol (PDCP) sublayer 304, and these sublayers terminate at the second communication node device. The PDCP sublayer 304 provides multiplexing between different radio bearers and logical channels. The PDCP sublayer 304 further provides security by encrypting a data packet and provides support for handover of a first communication node device between second communication node devices. The RLC sublayer 303 provides segmentation and reassembling of an upper-layer data packet, retransmission of a lost data packet, and reordering of a data packet so as to compensate for disordered receiving caused by a hybrid automatic repeat request (HARQ). The MAC sublayer 302 provides multiplexing between a logical channel and a transport channel. The MAC sublayer 302 is further responsible for allocating various radio resources (e.g., resource blocks) in a cell between first communication node devices. The MAC sublayer 302 is further responsible for a HARQ operation. An RRC sublayer 306 in the layer 3 (L3 layer) in the control plane 300 is responsible for obtaining a radio resource (that is, a radio bearer) and configuring a lower layer by using RRC signaling between the second communication node device and the first communication node device. A radio protocol architecture of the user plane 350 includes a layer 1 (L1 layer) and a layer 2 (L2 layer). In the user plane 350, for a PHY 351, a PDCP sublayer 354 in an L2 layer 355, an RLC sublayer 353 in the L2 layer 355, and a MAC sublayer 352 in the L2 layer 355, a radio protocol architecture for the first communication node device and the second communication node device is substantially the same as that for the corresponding layers and sublayers in the control plane 300. However, the PDCP sublayer 354 further provides header compression for an upper-layer data packet to reduce radio transmission overhead. The L2 layer 355 in the user plane 350 further includes a Service Data Adaptation Protocol (SDAP) sublayer 356. The SDAP sublayer 356 is responsible for mapping between a Quality of Service (QoS) flow and a Data Radio Bearer (DRB), to support diversity of services. Although not shown in the figure, the first communication node device may have several upper layers above the L2 layer 355, including a network layer (e.g., an IP layer) terminated at a P-GW on a network side and an application layer terminated at the other end (such as a remote UE or a server) of the connection.

As an embodiment, the wireless protocol architecture in FIG. 3 is applicable to the first node in this application.

As an embodiment, the wireless protocol architecture in FIG. 3 is applicable to the second node in this application.

As an embodiment, the first reporting configuration is generated in the RRC sublayer 306.

As an embodiment, the first CSI set is generated in the PHY 301 or the PHY 351.

As an embodiment, the higher layer in this application is a layer above the PHY.

### Embodiment 4

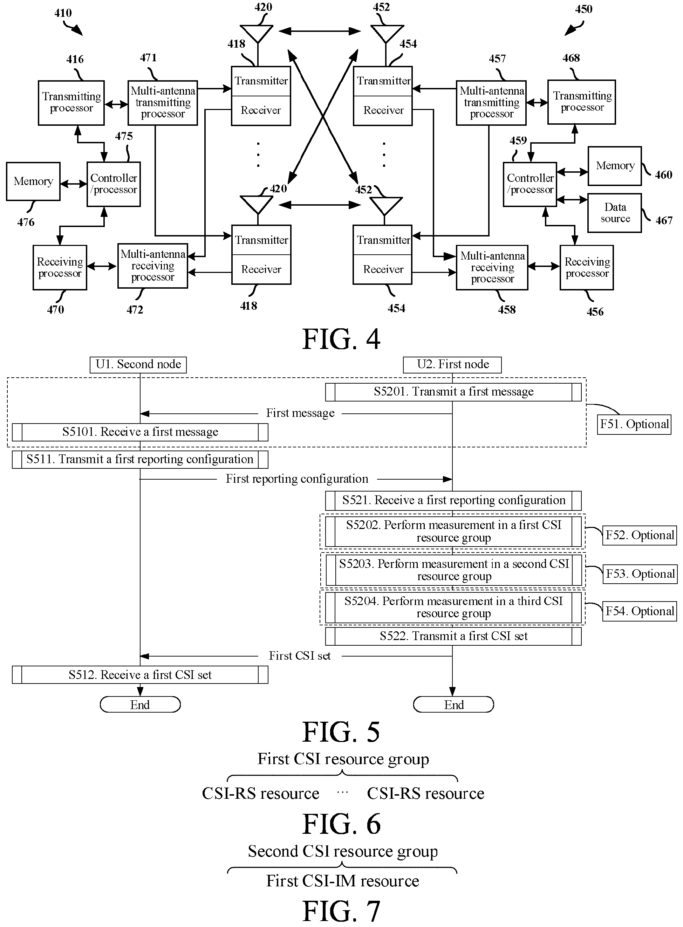

Embodiment 4 illustrates a schematic diagram of a first communication device and a second communication device according to an embodiment of this application, as shown in FIG. 4. FIG. 4 is a block diagram of a first communication device 410 and a second communication device 450 communicating with each other in an access network.

The first communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

During transmission from the first communication device 410 to the second communication device 450, at the first communication device 410, an upper-layer data packet from the core network is provided to the controller/processor 475. The controller/processor 475 implements the functions of the L2 layer. In DL, the controller/processor 475 provides header compression, encryption, packet segmentation and reordering, multiplexing between a logical channel and a transport channel, and radio resource allocation of the second communication device 450 based on various priority metrics. The controller/processor 475 is further responsible for a HARQ operation, retransmission of a lost packet, and signaling to the second communication device 450. The transmitting processor 416 and the multi-antenna transmitting processor 471 implement various signal processing functions for the L1 layer (that is, the PHY). The transmitting processor 416 implements coding and interleaving to facilitate forward error correction (FEC) at the second communication device 450 and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital space precoding, including codebook-based precoding and non-codebook-based precoding, and beamforming processing on encoded and modulated symbols to generate one or more parallel streams. The transmitting processor 416 then maps each parallel stream to a subcarrier, multiplexes a modulated symbol with a reference signal (i.e., pilot frequency) in a time domain and/or a frequency domain, and then uses inverse fast Fourier transform (IFFT) to generate a physical channel carrying a time-domain multi-carrier symbol stream. Subsequently, the multi-antenna transmitting processor 471 performs a transmission analog precoding/beamforming operation on the time-domain multi-carrier symbol stream. Each transmitter 418 converts a baseband multi-carrier symbol stream provided by the multi-antenna transmitting processor 471 into a radio-frequency stream, which is later provided to different antennas 420.

During transmission from the first communication device 410 to the second communication device 450, at the second communication device 450, each receiver 454 receives a signal by using a corresponding antenna 452 thereof. Each receiver 454 recovers information modulated onto a radio-frequency carrier, and converts the radio-frequency stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs a reception analog precoding/beamforming operation on the baseband multi-carrier symbol stream provided by the receiver 454. The receiving processor 456 converts, by using fast Fourier transform (FFT), the baseband multi-carrier symbol stream, on which the reception analog precoding/beamforming operation is performed, from the time domain to the frequency domain. In the frequency domain, a PHY data signal and a reference signal are demultiplexed by the receiving processor 456, where the reference signal is used for channel estimation, and after multi-antenna detection in the multi-antenna receiving processor 458, the data signal restores any parallel stream using the second communication device 450 as a destination. A symbol in each parallel stream is demodulated and recovered in the receiving processor 456, and a soft decision is generated. Subsequently, the receiving processor 456 decodes and deinterleaves the soft decision to recover the upper-layer data and the control signal that are transmitted by the first communication device 410 on the physical channel. Then, the upper-layer data and the control signal are provided to the controller/processor 459. The controller/processor 459 implements the functions of the L2 layer. The controller/processor 459 may be associated with a memory 460 that stores program code and data. The memory 460 may be referred to as a computer-readable medium. In the DL, the controller/processor 459 provides demultiplexing between a transport channel and a logical channel, packet reassembling, decryption, header decompression, and control signal processing to recover the upper-layer data packet from the core network. The upper-layer packet is later provided to all protocol layers above the L2 layer. Various control signals may alternatively be provided to L3 for processing by L3. The controller/processor 459 is further responsible for performing, by using an acknowledge (ACK) protocol and/or a negative acknowledge (NACK) protocol, error detection, to support the HARQ operation.

During transmission from the second communication device 450 to the first communication device 410, at the second communication device 450, the upper-layer data packet is provided to the controller/processor 459 by using a data source 467. The data source 467 represents all protocol layers above the L2 layer. Similar to a transmitting function at the first communication device 410 described in the DL, the controller/processor 459 implements header compression and encryption, packet segmentation and reordering, and multiplexing between a logical channel and a transport channel based on radio resource allocation of the first communication device 410, and implements an L2 layer function for the user plane and the control plane. The controller/processor 459 is further responsible for a HARQ operation, retransmission of a lost packet, and signaling to the first communication device 410. The transmitting processor 468 performs modulation mapping and channel coding. The multi-antenna transmitting processor 457 performs digital multi-antenna space precoding, including codebook-based precoding and non-codebook-based precoding, and beamforming. Subsequently, the transmitting processor 468 modulates generated parallel streams into a multi-carrier/single-carrier symbol stream which is subjected to an analog precoding/beamforming operation in the multi-antenna transmitting processor 457 and then provided to different antennas 452 by using the transmitter 454. Each transmitter 454 first converts a baseband symbol stream provided by the multi-antenna transmitting processor 457 into a radio-frequency symbol stream which is then provided to the antenna 452.

During transmission from the second communication device 450 to the first communication device 410, the function at the first communication device 410 is similar to the receiving function at the second communication device 450 described during transmission from the first communication device 410 to the second communication device 450. Each receiver 418 receives a radio-frequency signal by using a corresponding antenna 420 thereof, converts the received radio-frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with a memory 476 that stores program code and data. The memory 476 may be referred to as a computer-readable medium. The controller/processor 475 provides demultiplexing between a transport channel and a logical channel, packet reassembling, decryption, header decompression, and control signal processing to recover the upper-layer data packet from the second communication device 450. The upper-layer data packet from the controller/processor 475 may be provided to the core network. The controller/processor 475 is further responsible for performing, by using an ACK protocol and/or a NACK protocol, error detection to support the HARQ operation.

As an embodiment, the second communication device 450 includes at least one processor and at least one memory. The at least one memory includes computer program code. The at least one memory and the computer program code are configured to be used with the at least one processor. The second communication device 450 receives at least the first reporting configuration; and transmits the first CSI set. The first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

As an embodiment, the second communication device 450 includes a memory storing a computer-readable instruction program. The computer-readable instruction program generates actions when being executed by at least one processor. The actions include: receiving the first reporting configuration; and transmitting the first CSI set.

As an embodiment, the first communication device 410 includes at least one processor and at least one memory. The at least one memory includes computer program code. The at least one memory and the computer program code are configured to be used with the at least one processor. The first communication device 410 transmits at least the first reporting configuration; and receives the first CSI set. The first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

As an embodiment, the first communication device 410 includes a memory storing a computer-readable instruction program. The computer-readable instruction program generates actions when being executed by at least one processor. The actions include: transmitting the first reporting configuration; and receiving the first CSI set.

As an embodiment, the first node in this application includes the second communication device 450.

As an embodiment, the second node in this application includes the first communication device 410.

As an embodiment, at least one of {the antenna 452, the receiver 454, the receiving processor 456, the multi-antenna receiving processor 458, the controller/processor 459, the memory 460, and the data source 467} is configured to receive the first reporting configuration; and at least one of {the antenna 420, the transmitter 418, the transmitting processor 416, the multi-antenna transmitting processor 471, the controller/processor 475, and the memory 476} is configured to transmit the first reporting configuration.

As an embodiment, at least one of {the antenna 420, the receiver 418, the receiving processor 470, the multi-antenna receiving processor 472, the controller/processor 475, and the memory 476} is configured to receive the first CSI set; and at least one of {the antenna 452, the transmitter 454, the transmitting processor 468, the multi-antenna transmitting processor 457, the controller/processor 459, the memory 460, and the data source 467} is configured to transmit the first CSI set.

As an embodiment, at least one of {the antenna 420, the receiver 418, the receiving processor 470, the multi-antenna receiving processor 472, the controller/processor 475, and the memory 476} is configured to receive the first message; and at least one of {the antenna 452, the transmitter 454, the transmitting processor 468, the multi-antenna transmitting processor 457, the controller/processor 459, the memory 460, and the data source 467} is configured to transmit the first message.

### Embodiment 5

Embodiment 5 illustrates a flowchart of transmission according to an embodiment of this application, as shown in FIG. 5. In FIG. 5, a second node U1 and a first node U2 are communication nodes performing transmission by using an air interface. In FIG. 5, steps in a box F51 to a box F54 are respectively optional.

The second node U1 receives a first message in step S5101; transmits a first reporting configuration in step S511; and receives a first CSI set in step S512.

The first node U2 transmits a first message in step S5201; receives a first reporting configuration in step S521; performs measurement in a first CSI resource group in step S5202; performs measurement in a second CSI resource group in step S5203; performs measurement in a third CSI resource group in step S5204; and transmits a first CSI set in step S522.

In Embodiment 5, the first reporting configuration is applied by the first node U2 to the first CSI set; the first reporting configuration is used by the first node U2 to determine a first CSI resource group and a first frequency-domain resource, the first CSI resource group including at least two CSI resources, and measurement on the first CSI resource group is by the first node U2 to calculate the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

As an embodiment, the first node U2 is the first node in this application.

As an embodiment, the second node U1 is the second node in this application.

As an embodiment, the air interface between the second node U1 and the first node U2 includes a wireless interface between a base station device and a UE.

As an embodiment, the air interface between the second node U1 and the first node U2 includes a wireless interface between a relay node device and a UE.

As an embodiment, the air interface between the second node U1 and the first node U2 includes a wireless interface between UEs.

As an embodiment, the second node U1 is a serving cell maintaining base station of the first node U2.

As an embodiment, the first reporting configuration is used by the second node U1 to configure a CSI reporting for the first frequency-domain resource.

As an embodiment, the first reporting configuration is transmitted in a Physical Downlink Shared Channel (PDSCH).

As an embodiment, the first CSI set is transmitted in a Physical Uplink Shared CHannel (PUSCH).

As an embodiment, the first CSI set is transmitted in a PUCCH.

As an embodiment, if the step in the box F51 in FIG. 5 exists, the first message is used for determining that each CSI resource in the first CSI resource group is configured to pass across only part of the PRBs in the first frequency-domain resource, and the first message is used for indicating a capability of the first node U2.

As an embodiment, the first message is used by the second node U1 to determine that each CSI resource in the first CSI resource group is configured to pass across only part of the PRBs in the first frequency-domain resource.

As an embodiment, the first message is transmitted in a PUSCH.

As an embodiment, if the step in the box F52 in FIG. 5 exists, the foregoing method in the first node used for wireless communication includes: performing measurement in the first CSI resource group.

As a sub-embodiment of the foregoing embodiment, the first node performs the measurement in at least one CSI resource in the first CSI resource group.

As an embodiment, any CSI resource in the first CSI resource group is a CSI-RS resource, and the foregoing method in the second node used for wireless communication includes: transmitting an RS in the first CSI resource group.

As a sub-embodiment of the foregoing embodiment, the second node transmits an RS in at least one CSI resource in the first CSI resource group.

As an embodiment, if the step in the box F53 in FIG. 5 exists, the foregoing method in the first node used for wireless communication includes: performing measurement in the second CSI resource group; where the first reporting configuration is used by the first node U2 to determine the second CSI resource group, the second CSI resource group including a first CSI-IM resource, PRBs occupied by the first CSI-IM resource are contiguous in the frequency domain, and the PRBs occupied by the first CSI-IM resource include each PRB in the first frequency-domain resource.

As a sub-embodiment of the foregoing embodiment, the first node performs the measurement in at least one CSI resource in the second CSI resource group.

As an embodiment, if the step in the box F54 in FIG. 5 exists, the foregoing method in the first node used for wireless communication includes: performing measurement in the third CSI resource group; where the first reporting configuration is used by the first node U2 to determine the third CSI resource group, the third CSI resource group including a first CSI-RS resource, PRBs occupied by the first CSI-RS resource are contiguous in the frequency domain, and the PRBs occupied by the first CSI-RS resource include each PRB in the first frequency-domain resource.

As a sub-embodiment of the foregoing embodiment, the first node performs the measurement in at least one CSI resource in the third CSI resource group.

As an embodiment, the foregoing method in the second node used for wireless communication includes: transmitting an RS in the third CSI resource group.

As a sub-embodiment of the foregoing embodiment, the second node transmits an RS in at least one CSI resource in the third CSI resource group.

### Embodiment 6

Embodiment 6 illustrates a schematic diagram of a first CSI resource group according to an embodiment of this application, as shown in FIG. 6. In Embodiment 6, each CSI resource in the first CSI resource group is a CSI-RS resource, and the measurement on the first CSI resource group is channel measurement.

As an embodiment, each CSI resource in the first CSI resource group is an NZP CSI-RS resource.

As an embodiment, the first node obtains, based on each CSI resource in the first CSI resource group, channel measurement used for calculating the first CSI set.

As an embodiment, the first node obtains, based on at least one CSI resource in the first CSI resource group, channel measurement used for calculating the first CSI set.

As an embodiment, each CSI resource in the first CSI resource group is a CSI-RS resource, and each CSI resource in the first CSI resource group is identified by an NZP-CSI-RS-ResourceId.

As an embodiment, a higher-layer parameter "resourcesForChannelMeasurement" of the first reporting configuration is used for determining the first CSI resource group.

As an embodiment, the higher-layer parameter "resourcesForChannelMeasurement" of the first reporting configuration indicates the first CSI resource group.

As an embodiment, each CSI resource in the first CSI resource group is a CSI-RS resource; and for any given CSI resource in the first CSI resource group, PRBs across which the given CSI resource passes are configured by an NZP-CSI-RS-Resource IE configuring the given CSI resource.

As an embodiment, each CSI resource in the first CSI resource group is a CSI-RS resource, and for any given CSI resource in the first CSI resource group, PRBs across which the given CSI resource passes are configured by a resourceMapping field of an NZP-CSI-RS-Resource IE configuring the given CSI resource.

As an embodiment, each CSI resource in the first CSI resource group is a CSI-RS resource; and for any given CSI resource in the first CSI resource group, PRBs across which the given CSI resource passes are configured by a CSI-RS-ResourceMapping IE configuring the given CSI resource.

As a sub-embodiment of the foregoing embodiment, the PRBs across which the given CSI resource passes are indicated by a freqBand field of the CSI-RS-ResourceMapping IE configuring the given CSI resource.

As a sub-embodiment of the foregoing embodiment, the freqBand field of the CSI-RS-ResourceMapping IE configuring the given CSI resource indicates a starting PRB across which the given CSI resource passes and a quantity of PRBs across which the given CSI resource passes.

As an embodiment, each CSI resource in the first CSI resource group is a CSI-RS resource, and for any given CSI resource in the first CSI resource group, PRBs across which the given CSI resource passes are configured by a CSI-FrequencyOccupation IE configuring the given CSI resource.

As a sub-embodiment of the foregoing embodiment, the CSI-FrequencyOccupation IE corresponding to the given CSI resource indicates a starting PRB across which the given CSI resource passes and a quantity of PRBs across which the given CSI resource passes.

### Embodiment 7

Embodiment 7 illustrates a schematic diagram of a second CSI resource group according to an embodiment of this application, as shown in FIG. 7. In Embodiment 7, the first reporting configuration is used for determining the second CSI resource group, the second CSI resource group including the first CSI-IM resource, PRBs occupied by the first CSI-IM resource are contiguous in the frequency domain, and the PRBs occupied by the first CSI-IM resource include each PRB in the first frequency-domain resource.

As an embodiment, a higher-layer parameter "csi-IM-ResourcesForInterference" of the first reporting configuration is used for determining the second CSI resource group.

As an embodiment, the first reporting configuration indicates the second CSI resource group.

As an embodiment, the higher-layer parameter "csi-IM-ResourcesForInterference" of the first reporting configuration indicates the second CSI resource group.

As an embodiment, the first reporting configuration indicates Q3 CSI resources, where Q3 is a positive integer greater than 1; any CSI resource in the second CSI resource group is one of the Q3 CSI resources, and at least one of the Q3 CSI resources does not belong to the second CSI resource group; and a first information block indicates the second CSI resource group from the Q3 CSI resources.

As a sub-embodiment of the foregoing embodiment, the higher-layer parameter "csi-IM-ResourcesForInterference" of the first reporting configuration indicates the Q3 CSI resources.

As a sub-embodiment of the foregoing embodiment, any of the Q3 CSI resources is a CSI-IM resource.

As an embodiment, the second CSI resource group includes at least one CSI resource, and the first CSI-IM resource is one of the at least one CSI resource.

As an embodiment, the second CSI resource group includes only one CSI resource, and the CSI resource is the first CSI-IM resource.

As an embodiment, the second CSI resource group includes a plurality of CSI resources, and the first CSI-IM resource is one of the plurality of CSI resources.

As a sub-embodiment of the foregoing embodiment, any CSI resource in the second CSI resource group is a CSI-IM resource.

As a sub-embodiment of the foregoing embodiment, all the CSI resources in the second CSI resource group belong to a same CSI-IM resource set.

As a sub-embodiment of the foregoing embodiment, CSI-IM resource sets to which any two CSI resources in the second CSI resource group belong are identified by a same CSI-IM-ResourceSetId.

As an embodiment, the second CSI resource group includes at least one CSI resource, and any CSI resource in the second CSI resource group is a CSI-IM resource.

As an embodiment, a quantity of CSI resources included in the second CSI resource group is less than a quantity of CSI resources includes in the first CSI resource group.

As an embodiment, the quantity of CSI resources included in the first CSI resource group is equal to a positive integer multiple greater than 1 of the quantity of CSI resources included in the second CSI resource group.

As an embodiment, any CSI resource in the first CSI resource group is a CSI-RS resource, and the first CSI resource group includes two CSI resources, the two CSI resources respectively belonging to two different CSI-RS resource sets; and a quantity of CSI-RS resources included in any one of the two different CSI-RS resource sets is equal to the quantity of CSI resources included in the second CSI resource group.

As an embodiment, the first frequency-domain resource does not include a PRB in which the first CSI-IM resource does not appear.

As an embodiment, the second CSI resource group includes a plurality of CSI-IM resources, PRBs occupied by any one of the plurality of CSI-IM resources are contiguous in the frequency domain, and the PRBs occupied by any one of the plurality of CSI-IM resources include each PRB in the first frequency-domain resource.

As an embodiment, measurement on the second CSI resource group is used by the first node to calculate the first CSI set.

As an embodiment, the measurement on the second CSI resource group is used for calculating each piece of CSI in the first CSI set.

As an embodiment, interference measurement on the second CSI resource group is used for calculating the first CSI set.

As an embodiment, interference measurement on each CSI resource in the second CSI resource group is used for calculating the first CSI set.

As an embodiment, interference measurement on at least one CSI resource in the second CSI resource group is used for calculating the first CSI set.

As an embodiment, the first node obtains, based on the second CSI resource group, interference measurement used for calculating the first CSI set.

As an embodiment, the first node obtains, based on the first CSI resource group, channel measurement used for calculating the first CSI set, and obtains, based on the second CSI resource group, interference measurement used for calculating the first CSI set.

As an embodiment, the PRBs occupied by the first CSI-IM resource are PRBs across which the first CSI-IM resource passes.

As an embodiment, the PRBs occupied by the first CSI-IM resource are configured by a higher-layer parameter.

As an embodiment, the PRBs occupied by the first CSI-IM resource are configured by a higher-layer parameter "CSI-FrequencyOccupation".

As an embodiment, the PRBs occupied by the first CSI-IM resource are configured by a freqBand field of a CSI-IM-Resource IE configuring the first CSI-IM resource.

As an embodiment, the PRBs occupied by the first CSI-IM resource are configured by CSI-FrequencyOccupation indicated by the freqBand field of the CSI-IM-Resource IE configuring the first CSI-IM resource.

As an embodiment, the freqBand field of the CSI-IM-Resource IE configuring the first CSI-IM resource indicates a starting PRB occupied by the first CSI-IM resource and a quantity of PRBs occupied by the first CSI-IM resource.

As an embodiment, PRBs occupied by one CSI-IM resource are PRBs configured for the CSI-IM resource.

As an embodiment, PRBs occupied by one CSI-IM resource are PRBs configured by a higher-layer parameter for the CSI-IM resource.

As an embodiment, PRBs occupied by one CSI-IM resource are PRBs configured by a CSI-IM-Resource IE configuring the CSI-IM resource.

As an embodiment, PRBs occupied by one CSI-IM resource are PRBs configured by a freqBand field of a CSI-IM-Resource IE configuring the CSI-IM resource.

As an embodiment, PRBs occupied by one CSI-IM resource are PRBs configured by a higher-layer parameter "CSI-FrequencyOccupation" for the CSI-IM resource.

As an embodiment, PRBs across which one CSI-IM resource passes are determined by a starting PRB and a quantity of PRBs configured by a higher-layer parameter for the CSI-IM resource.

### Embodiment 8

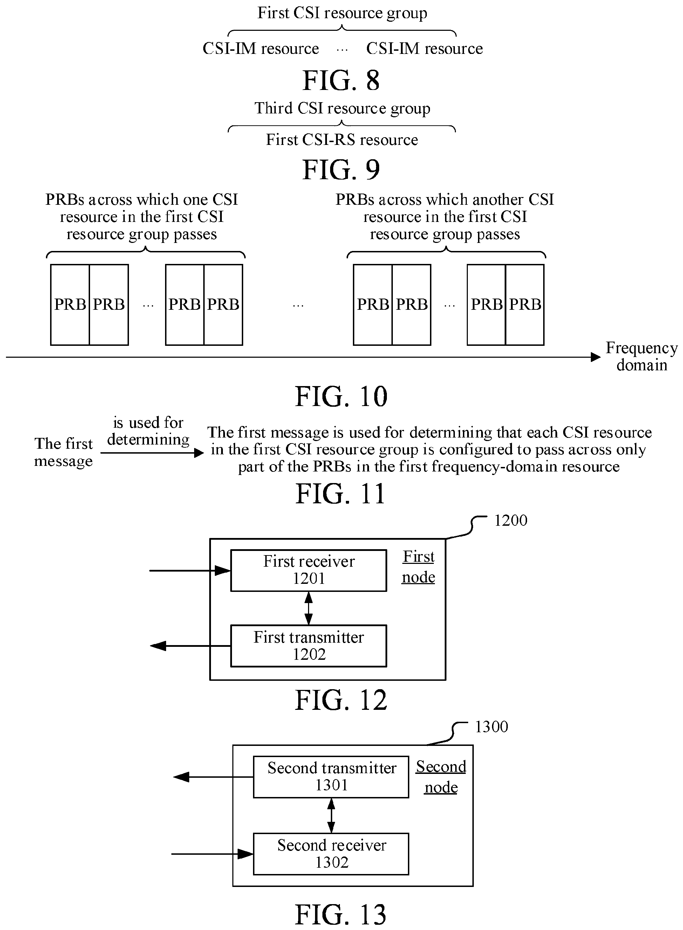

Embodiment 8 illustrates a schematic diagram of a first CSI resource group according to an embodiment of this application, as shown in FIG. 8. In Embodiment 8, each CSI resource in the first CSI resource group is a CSI-IM resource, and the measurement on the first CSI resource group is interference measurement.

As an embodiment, the first node obtains, based on each CSI resource in the first CSI resource group, interference measurement used for calculating the first CSI set.

As an embodiment, the first node obtains, based on at least one CSI resource in the first CSI resource group, interference measurement used for calculating the first CSI set.

As an embodiment, each CSI resource in the first CSI resource group is a CSI-IM resource, and each CSI resource in the first CSI resource group is identified by a CSI-IM-ResourceId.

As an embodiment, at least one of a higher-layer parameter "csi-IM-ResourcesForInterference" and a higher-layer parameter "nzp-CSI-RS-ResourcesForInterference" of the first reporting configuration is used for determining the first CSI resource group.

As an embodiment, at least one of the higher-layer parameter "csi-IM-ResourcesForInterference" and the higher-layer parameter "nzp-CSI-RS-ResourcesForInterference" of the first reporting configuration indicates the first CSI resource group.

As an embodiment, each CSI resource in the first CSI resource group is a CSI-IM resource, and for any given CSI resource in the first CSI resource group, PRBs across which the given CSI resource passes are PRBs occupied by the given CSI resource.

As an embodiment, each CSI resource in the first CSI resource group is a CSI-IM resource, and for any given CSI resource in the first CSI resource group, PRBs across which the given CSI resource passes are configured by a CSI-IM-Resource IE configuring the given CSI resource.

As an embodiment, each CSI resource in the first CSI resource group is a CSI-IM resource, and for any given CSI resource in the first CSI resource group, PRBs across which the given CSI resource passes are configured by a freqBand field of a CSI-IM-Resource IE configuring the given CSI resource.

As an embodiment, each CSI resource in the first CSI resource group is a CSI-IM resource, and for any given CSI resource in the first CSI resource group, PRBs across which the given CSI resource passes are configured by CSI-FrequencyOccupation indicated by a freqBand field of a CSI-IM-Resource IE configuring the given CSI resource.

As an embodiment, each CSI resource in the first CSI resource group is a CSI-IM resource, and for any given CSI resource in the first CSI resource group, a freqBand field of a CSI-IM-Resource IE configuring the given CSI resource indicates a starting PRB across which the given CSI resource passes and a quantity of PRBs across which the first CSI resource passes.

### Embodiment 9

Embodiment 9 illustrates a schematic diagram of a third CSI resource group according to an embodiment of this application, as shown in FIG. 9. In Embodiment 9, the first reporting configuration is used for determining a third CSI resource group, the third CSI resource group includes a first CSI-RS resource, PRBs across which the first CSI-RS resource passes are contiguous in the frequency domain, and the PRBs across which the first CSI-RS resource passes include each PRB in the first frequency-domain resource.

As an embodiment, the first reporting configuration indicates the third CSI resource group.

As an embodiment, a higher-layer parameter "resourcesForChannelMeasurement" of the first reporting configuration is used for determining the third CSI resource group.

As an embodiment, a higher-layer parameter "nzp-CSI-RS-ResourcesForInterference" of the first reporting configuration is used for determining the third CSI resource group.

As an embodiment, the higher-layer parameter "resourcesForChannelMeasurement" of the first reporting configuration indicates the third CSI resource group.

As an embodiment, the higher-layer parameter "nzp-CSI-RS-ResourcesForInterference" of the first reporting configuration indicates the third CSI resource group.

As an embodiment, the first reporting configuration indicates Q4 CSI resources, where Q4 is a positive integer greater than 1; any CSI resource in the third CSI resource group is one of the Q4 CSI resources, and at least one of the Q4 CSI resources does not belong to the third CSI resource group; and a first information block indicates the third CSI resource group from the Q4 CSI resources.

As a sub-embodiment of the foregoing embodiment, the higher-layer parameter "resourcesForChannelMeasurement" of the first reporting configuration indicates the Q4 CSI resources.

As a sub-embodiment of the foregoing embodiment, the higher-layer parameter "nzp-CSI-RS-ResourcesForInterference" of the first reporting configuration indicates the Q4 CSI resources.

As a sub-embodiment of the foregoing embodiment, any of the Q4 CSI resources is a CSI-RS resource.

As an embodiment, the first CSI resource group is an NZP CSI-RS resource set.

As an embodiment, the third CSI resource group includes at least one CSI resource, and the first CSI-RS resource is one of the at least one CSI resource.

As an embodiment, the third CSI resource group includes only one CSI resource, and the CSI resource is the first CSI-RS resource.

As an embodiment, the third CSI resource group includes a plurality of CSI resources, and the first CSI-RS resource is one of the plurality of CSI resources.

As a sub-embodiment of the foregoing embodiment, any CSI resource in the third CSI resource group is a CSI-RS resource.

As a sub-embodiment of the foregoing embodiment, all the CSI resources in the third CSI resource group belong to a same CSI-RS resource set.

As a sub-embodiment of the foregoing embodiment, CSI-RS resource sets to which any two CSI resources in the third CSI resource group belong are identified by a same NZP-CSI-RS-ResourceSetId.

As an embodiment, the third CSI resource group includes at least one CSI resource, and any CSI resource in the third CSI resource group is a CSI-RS resource.

As a sub-embodiment of the foregoing embodiment, any CSI resource in the third CSI resource group is an NZP CSI-RS resource.

As an embodiment, a quantity of CSI resources included in the third CSI resource group is less than the quantity of CSI resources includes in the first CSI resource group.

As an embodiment, the quantity of CSI resources included in the first CSI resource group is equal to a positive integer multiple greater than 1 of the quantity of CSI resources included in the third CSI resource group.

As an embodiment, the first CSI resource group includes two CSI resources, the two CSI resources respectively belonging to two different CSI resource sets; and a quantity of CSI-RS resources included in any one of the two different CSI-RS resource sets is equal to the quantity of CSI resources included in the third CSI resource group.

As a sub-embodiment of the foregoing embodiment, any CSI resource in the first CSI resource group is a CSI-IM resource, and the two different CSI-RS resource sets are respectively CSI-IM resource sets.

As a sub-embodiment of the foregoing embodiment, any CSI resource in the first CSI resource group is an NZP CSI-RS resource, and the two different CSI-RS resource sets are respectively NZP CSI-RS resource sets.

As an embodiment, the first frequency-domain resource does not include a PRB across which the CSI-RS resource does not pass.

As an embodiment, for any given subband in the first frequency-domain resource, density of the first CSI-RS resource per PRB per port in the given subband is no less than density at which the first CSI-RS resource is configured.

As an embodiment, the third CSI resource group includes a plurality of CSI-RS resources, PRBs across which any one of the plurality of CSI-RS resources passes are contiguous in the frequency domain, and the PRBs across which any one of the plurality of CSI-RS resources passes include each PRB in the first frequency-domain resource.

As an embodiment, the third CSI resource group includes a plurality of CSI-RS resources, and for any given subband in the first frequency-domain resource, density of any one of the plurality of CSI-RS resources per PRB per port in the given subband is no less than density at which the CSI-RS resource is configured.

As an embodiment, the third CSI resource group includes a plurality of CSI-RS resources, and a same starting PRB and a same quantity of PRBs are configured for any two of the plurality of CSI-RS resources.

As an embodiment, measurement on the third CSI resource group is used by the first node to calculate the first CSI set.

As an embodiment, the measurement on the third CSI resource group is used for calculating each piece of CSI in the first CSI set.

As an embodiment, channel measurement on the third CSI resource group is used for calculating the first CSI set.

As an embodiment, channel measurement on each CSI resource in the third CSI resource group is used for calculating the first CSI set.

As an embodiment, channel measurement on at least one CSI resource in the third CSI resource group is used for calculating the first CSI set.

As an embodiment, the first node obtains, based on the third CSI resource group, channel measurement used for calculating the first CSI set.

As an embodiment, the first node obtains, based on the first CSI resource group, interference measurement used for calculating the first CSI set, and obtains, based on the third CSI resource group, channel measurement used for calculating the first CSI set.

As an embodiment, the interference measurement on the third CSI resource group is used for calculating the first CSI set.

As an embodiment, interference measurement on each CSI resource in the third CSI resource group is used for calculating the first CSI set.

As an embodiment, interference measurement on at least one CSI resource in the third CSI resource group is used for calculating the first CSI set.

As an embodiment, the first node obtains, based on the third CSI resource group, interference measurement used for calculating the first CSI set.

As an embodiment, the first node obtains, based on the first CSI resource group and the third CSI resource group, interference measurement used for calculating the first CSI set.

As an embodiment, density of the first CSI-RS resource is no less than 1, and PRBs occupied by the first CSI-RS resource are PRBs across which the first CSI-RS resource passes.

As an embodiment, the density of the first CSI-RS resource is 0.5, and the first CSI-RS resource occupies all odd PRBs or even PRBs in the PRBs across which the first CSI-RS resource passes.

As a sub-embodiment of the foregoing embodiment, the first CSI-RS resource occupies only the odd PRBs in the PRBs across which the given CSI resource passes, or the first CSI-RS resource occupies only the even PRBs in the PRBs across which the given CSI resource passes.

As an embodiment, the PRBs across which the first CSI-RS resource passes are configured by a higher-layer parameter.

As an embodiment, the PRBs across which the first CSI-RS resource passes are configured by a higher-layer parameter "CSI-FrequencyOccupation".

As an embodiment, the PRBs across which the first CSI-RS resource passes are configured by a resourceMapping field of an NZP-CSI-RS-Resource IE configuring the first CSI-RS resource.

As an embodiment, the PRBs across which the first CSI-RS resource passes are configured by a CSI-RS-ResourceMapping IE configuring the first CSI-RS resource.

As an embodiment, the PRBs across which the first CSI-RS resource passes are indicated by a freqBand field of the CSI-RS-ResourceMapping IE configuring the first CSI-RS resource.

As an embodiment, the PRBs across which the first CSI-RS resource passes are indicated by CSI-FrequencyOccupation of the freqBand field of the CSI-RS-ResourceMapping IE configuring the first CSI-RS resource.

As an embodiment, the freqBand field of the CSI-RS-ResourceMapping IE configuring the first CSI-RS resource indicates a starting PRB occupied by the first CSI-RS resource and a quantity of PRBs occupied by the first CSI-RS resource.

As an embodiment, the PRBs across which the first CSI-RS resource passes are configured by a CSI-FrequencyOccupation IE corresponding to the first CSI-RS resource.

As a sub-embodiment of the foregoing embodiment, the CSI-FrequencyOccupation IE corresponding to the first CSI-RS resource indicates a starting PRB across which the first CSI-RS resource passes and a quantity of PRBs across which the first CSI-RS resource passes.

### Embodiment 10

Embodiment 10 illustrates a schematic diagram showing that PRBs across which any two CSI resources in a first CSI resource group pass do not completely overlap according to an embodiment of this application, as shown in FIG. 10.

As an embodiment, PRBs across which any two CSI resources in the first CSI resource group pass are orthogonal to each other.

As an embodiment, there is no PRB across which two CSI resources in the first CSI resource group pass.

As an embodiment, there is at least one PRB across which two CSI resources in the first CSI resource group pass.

### Embodiment 11

Embodiment 11 illustrates a schematic diagram of a first message according to an embodiment of this application, as shown in FIG. 11. In Embodiment 11, the first message is used for determining that each CSI resource in the first CSI resource group is configured to pass across only part of the PRBs in the first frequency-domain resource, and the first message is used for indicating a capability of the first node.

As an embodiment, the first message is RRC layer signaling.

As an embodiment, the first message belongs to a UE-CapabilityRAT-Container.

As an embodiment, the first message belongs to a UE-NR-Capability IE.

As an embodiment, the first message belongs to a FeatureSetDownlink IE.

As an embodiment, the first message indicates that the first node supports each CSI resource in the first CSI resource group to be configured to pass across only part of the PRBs in the first frequency-domain resource.

As an embodiment, the first message indicates that the first node supports CSI resources configured to pass across only part of the PRBs in the first frequency-domain resource and used for channel measurement and CSI resources configured to pass across all the PRBs in the first frequency-domain resource and used for interference measurement.

As an embodiment, the first message indicates that the first node supports CSI resources configured to pass across only part of the PRBs in the first frequency-domain resource and used for interference measurement and CSI resources configured to pass across all the PRBs in the first frequency-domain resource and used for channel measurement.

As an embodiment, the first message indicates that the first node supports one CSI resource configured to pass across only part of the PRBs in the first frequency-domain resource and used for interference measurement and another CSI resource configured to pass across all the PRBs in the first frequency-domain resource and used for interference measurement.

As an embodiment, the first message indicates that the first node supports CSI resources configured to pass across only part of PRBs in a frequency-domain resource for which an associated CSI reporting is targeted and used for channel measurement.

As an embodiment, the first message indicates that the first node supports CSI resources configured to pass across only part of PRBs in a frequency-domain resource for which an associated CSI reporting is targeted and used for interference measurement.

As an embodiment, the first message indicates that the first node supports that a CSI-RS resource set includes at least two CSI-RS resources passing across different frequency-domain resources.

As an embodiment, the first message indicates that the first node supports that CSI-RS resources associated with a CSI reporting configuration include at least two CSI-RS resources passing across different frequency-domain resources.

As an embodiment, the first message indicates that the first node supports that CSI-IM resources associated with a CSI reporting configuration include at least two CSI-IM resources passing across different frequency-domain resources.

As an embodiment, an indication of the first message may be explicit or implicit.

### Embodiment 12

Embodiment 12 illustrates a structural block diagram of a processing apparatus used in a first node device according to an embodiment of this application, as shown in FIG. 12. In FIG. 12, a processing apparatus 1200 in a first node device includes a first receiver 1201 and a first transmitter 1202.

In Embodiment 12, the first receiver 1201 receives a first reporting configuration; and the first transmitter 1202 transmits a first CSI set.

In Embodiment 12, the first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

As an embodiment, each CSI resource in the first CSI resource group is a CSI-RS resource, and the measurement on the first CSI resource group is channel measurement.

As an embodiment, the first reporting configuration is used for determining a second CSI resource group, the second CSI resource group including the first CSI-IM resource, PRBs occupied by the first CSI-IM resource are contiguous in the frequency domain, and the PRBs occupied by the first CSI-IM resource include each PRB in the first frequency-domain resource.

As an embodiment, each CSI resource in the first CSI resource group is a CSI-IM resource, and the measurement on the first CSI resource group is interference measurement.

As an embodiment, the first reporting configuration is used for determining a third CSI resource group, the third CSI resource group includes a first CSI-RS resource, PRBs across which the first CSI-RS resource passes are contiguous in the frequency domain, and the PRBs across which the first CSI-RS resource passes include each PRB in the first frequency-domain resource.

As an embodiment, PRBs across which any two CSI resources in the first CSI resource group pass do not completely overlap.

As an embodiment, the first transmitter 1202 transmits a first message; where the first message is used for determining that each CSI resource in the first CSI resource group is configured to pass across only part of the PRBs in the first frequency-domain resource, and the first message is used for indicating a capability of the first node.

As an embodiment, the first node is a UE.

As an embodiment, the first node is a relay node device.

As an embodiment, the first receiver 1201 performs measurement in the first CSI resource group.

As an embodiment, the first receiver 1201 performs measurement in the second CSI resource group.

As an embodiment, the first receiver 1201 performs measurement in the third CSI resource group.

As an embodiment, the first reporting configuration is a CSI reporting configuration; the first CSI set includes at least one piece of CSI, and any piece of CSI in the first CSI set is one of a CQI, a PMI, a CRI, an LI, an RI, an SSBRI, L1-RSRP, an L1-SINR, a capability index, and a capability set index; and any CSI resource in the first CSI resource group is a CSI-RS resource or a CSI-IM resource.

As an embodiment, the first receiver 1201 includes at least one of {the antenna 452, the receiver 454, the receiving processor 456, the multi-antenna receiving processor 458, the controller/processor 459, the memory 460, and the data source 467} in Embodiment 4.

As an embodiment, the first transmitter 1202 includes at least one of {the antenna 452, the transmitter 454, the transmitting processor 468, the multi-antenna transmitting processor 457, the controller/processor 459, the memory 460, and the data source 467} in Embodiment 4.

### Embodiment 13

Embodiment 13 illustrates a structural block diagram of a processing apparatus used in a second node device according to an embodiment of this application, as shown in FIG. 13. In FIG. 13, a processing apparatus 1300 in a second node device includes a second transmitter 1301 and a second receiver 1302.

In Embodiment 13, the second transmitter 1301 transmits a first reporting configuration; and the second receiver 1302 receives a first CSI set.

In Embodiment 13, the first reporting configuration is applied to the first CSI set; the first reporting configuration is used for determining a first CSI resource group and a first frequency-domain resource, the first CSI resource group including at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource includes at least one PRB that does not belong to PRBs across which the CSI resource passes; and PRBs across which any CSI resource in the first CSI resource group passes are contiguous in a frequency domain.

As an embodiment, each CSI resource in the first CSI resource group is a CSI-RS resource, and the measurement on the first CSI resource group is channel measurement.

As an embodiment, the first reporting configuration is used for determining a second CSI resource group, the second CSI resource group including the first CSI-IM resource, PRBs occupied by the first CSI-IM resource are contiguous in the frequency domain, and the PRBs occupied by the first CSI-IM resource include each PRB in the first frequency-domain resource.

As an embodiment, each CSI resource in the first CSI resource group is a CSI-IM resource, and the measurement on the first CSI resource group is interference measurement.

As an embodiment, the first reporting configuration is used for determining a third CSI resource group, the third CSI resource group includes a first CSI-RS resource, PRBs across which the first CSI-RS resource passes are contiguous in the frequency domain, and the PRBs across which the first CSI-RS resource passes include each PRB in the first frequency-domain resource.

As an embodiment, PRBs across which any two CSI resources in the first CSI resource group pass do not completely overlap.

As an embodiment, the second receiver 1302 receives a first message; where the first message is used for determining that each CSI resource in the first CSI resource group is configured to pass across only part of the PRBs in the first frequency-domain resource, and the first message is used for indicating a capability of a sender of the first CSI set.

As an embodiment, the second node is a base station device.

As an embodiment, the second node is a UE.

As an embodiment, the second node is a relay node device.

As an embodiment, any CSI resource in the first CSI resource group is a CSI-RS resource, and the second transmitter 1301 transmits an RS in the first CSI resource group.

As an embodiment, the second transmitter 1301 transmits the RS in the third CSI resource group.

As an embodiment, the first reporting configuration is a CSI reporting configuration; the first CSI set includes at least one piece of CSI, and any piece of CSI in the first CSI set is one of a CQI, a PMI, a CRI, an LI, an RI, an SSBRI, L1-RSRP, an L1-SINR, a capability index, and a capability set index; and any CSI resource in the first CSI resource group is a CSI-RS resource or a CSI-IM resource.

As an embodiment, the second transmitter 1301 includes at least one of {the antenna 420, the transmitter 418, the transmitting processor 416, the multi-antenna transmitting processor 471, the controller/processor 475, and the memory 476} in Embodiment 4.

As an embodiment, the second receiver 1302 includes at least one of {the antenna 420, the receiver 418, the receiving processor 470, the multi-antenna receiving processor 472, the controller/processor 475, and the memory 476} in Embodiment 4.

A person of ordinary skill in the art may understand that all or some of the steps of the foregoing method may be implemented by a program instructing relevant hardware. The program may be stored in a computer-readable storage medium, such as a read-only memory, a hard disk, or an optical disc. Optionally, all or some of the steps of the foregoing embodiments may alternatively be implemented by using one or more integrated circuits. Correspondingly, the module units in the foregoing embodiments may be implemented in a form of hardware or may be implemented in a form of a software functional module. This application is not limited to a combination of software and hardware in any particular form. The terminal and the UE in this application include, but are not limited to, wireless communication devices such as unmanned aerial vehicles, communication modules on unmanned aerial vehicles, telecontrolled aircrafts, aircrafts, diminutive aeroplanes, mobile phones, tablet computers, notebook computers, vehicle-mounted communication devices, transportation tools, vehicles, Road Side Units (RSUs), wireless sensors, network cards, Internet of things terminals, radio frequency identification (RFID) terminals, narrow band Internet of things (NB-IOT) terminals, Machine Type Communication (MTC) terminals, enhanced MTC (eMTC) terminals, data cards, low-cost mobile phones, and low-cost tablet computers. The base station or system device in this application includes, but is not limited to, a macrocellular base station, a microcellular base station, a small cellular base station, a home base station, a relay base station, an eNB, a gNB, a Transmitter Receiver Point (TRP), a global navigation satellite system (GNSS), a relay satellite, a satellite base station, an aerial base station, an RSU, an unmanned aerial vehicle, a test device, for example, a wireless communication device such as a transceiver apparatus or a signaling tester simulating some functions of a base station.

A person skilled in the art should understand that the present disclosure may be implemented in other specified forms without departing from the core or basic characteristics thereof. Therefore, the currently disclosed embodiments should be considered as descriptive rather than restrictive in any way. The scope of the present disclosure is determined by the appended claims rather than the foregoing description, and all modifications within the equivalent meanings and regions thereof are considered to be included therein.

## Claims

1. A first node used for wireless communication, comprising:
a first receiver receiving a first reporting configuration; and
a first transmitter transmitting a first Channel State Information (CSI) set;
wherein the first reporting configuration is applied to the first CSI set; the first reporting configuration is used for determining a first CSI resource group and a first frequency-domain resource, the first CSI resource group comprising at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource comprises at least one Physical Resource Block (PRB) that does not belong to PRBs across which the CSI resource passes; and PRBs across which any CSI resource in the first CSI resource group passes are contiguous in a frequency domain.

2. The first node according to claim 1, wherein each CSI resource in the first CSI resource group is a channel state information-reference signal (CSI-RS) resource, and the measurement on the first CSI resource group is channel measurement.

3. The first node according to claim 2, wherein the first reporting configuration is used for determining a second CSI resource group, the second CSI resource group comprising a first channel state information-interference measurement (CSI-IM) resource, PRBs occupied by the first CSI-IM resource are contiguous in the frequency domain, and the PRBs occupied by the first CSI-IM resource comprise each PRB in the first frequency-domain resource.

4. The first node according to claim 1, wherein each CSI resource in the first CSI resource group is a CSI-IM resource, and the measurement on the first CSI resource group is interference measurement.

5. The first node according to claim 4, wherein the first reporting configuration is used for determining a third CSI resource group, the third CSI resource group comprising a first CSI-RS resource, PRBs across which the first CSI-RS resource passes are contiguous in the frequency domain, and the PRBs across which the first CSI-RS resource passes comprise each PRB in the first frequency-domain resource.

6. The first node according to any one of claims 1 to 5, wherein PRBs across which any two CSI resources in the first CSI resource group pass do not completely overlap.

7. The first node according to any one of claims 1 to 6, wherein the first transmitter transmits a first message; wherein the first message is used for determining that each CSI resource in the first CSI resource group is configured to pass across only part of the PRBs in the first frequency-domain resource, and the first message is used for indicating a capability of the first node.

8. A second node used for wireless communication, comprising:
a second transmitter transmitting a first reporting configuration; and
a second receiver receiving a first CSI set;
wherein the first reporting configuration is applied to the first CSI set; the first reporting configuration is used for determining a first CSI resource group and a first frequency-domain resource, the first CSI resource group comprising at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource comprises at least one PRB that does not belong to PRBs across which the CSI resource passes; and PRBs across which any CSI resource in the first CSI resource group passes are contiguous in a frequency domain.

9. The second node according to claim 8, wherein each CSI resource in the first CSI resource group is a CSI-RS resource, and the measurement on the first CSI resource group is channel measurement.

10. The second node according to claim 9, wherein the first reporting configuration is used for determining a second CSI resource group, the second CSI resource group comprising a first CSI-IM resource, PRBs occupied by the first CSI-IM resource are contiguous in the frequency domain, and the PRBs occupied by the first CSI-IM resource comprise each PRB in the first frequency-domain resource.

11. The second node according to claim 8, wherein each CSI resource in the first CSI resource group is a CSI-IM resource, and the measurement on the first CSI resource group is interference measurement.

12. The second node according to claim 11, wherein the first reporting configuration is used for determining a third CSI resource group, the third CSI resource group comprising a first CSI-RS resource, PRBs across which the first CSI-RS resource passes are contiguous in the frequency domain, and the PRBs across which the first CSI-RS resource passes comprise each PRB in the first frequency-domain resource.

13. The second node according to any one of claims 8 to 12, wherein PRBs across which any two CSI resources in the first CSI resource group pass do not completely overlap.

14. The second node according to any one of claims 8 to 13, wherein the second receiver receives a first message; wherein the first message is used for determining that each CSI resource in the first CSI resource group is configured to pass across only part of the PRBs in the first frequency-domain resource, and the first message is used for indicating a capability of a sender of the first CSI set.

15. A method in a first node used for wireless communication, comprising:
receiving a first reporting configuration; and
transmitting a first CSI set;
wherein the first reporting configuration is applied to the first CSI set; the first reporting configuration is used for determining a first CSI resource group and a first frequency-domain resource, the first CSI resource group comprising at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource comprises at least one PRB that does not belong to PRBs across which the CSI resource passes; and PRBs across which any CSI resource in the first CSI resource group passes are contiguous in a frequency domain.

16. The method according to claim 15, wherein each CSI resource in the first CSI resource group is a CSI-RS resource, and the measurement on the first CSI resource group is channel measurement.

17. The method according to claim 16, wherein the first reporting configuration is used for determining a second CSI resource group, the second CSI resource group comprising a first CSI-IM resource, PRBs occupied by the first CSI-IM resource are contiguous in the frequency domain, and the PRBs occupied by the first CSI-IM resource comprise each PRB in the first frequency-domain resource.

18. The method according to claim 15, wherein each CSI resource in the first CSI resource group is a CSI-IM resource, and the measurement on the first CSI resource group is interference measurement.

19. The method according to claim 18, wherein the first reporting configuration is used for determining a third CSI resource group, the third CSI resource group comprising a first CSI-RS resource, PRBs across which the first CSI-RS resource passes are contiguous in the frequency domain, and the PRBs across which the first CSI-RS resource passes comprise each PRB in the first frequency-domain resource.

20. The method according to any one of claims 15 to 19, wherein PRBs across which any two CSI resources in the first CSI resource group pass do not completely overlap.

21. The method according to any one of claims 15 to 20, comprising:
transmitting a first message;
wherein the first message is used for determining that each CSI resource in the first CSI resource group is configured to pass across only part of the PRBs in the first frequency-domain resource, and the first message is used for indicating a capability of the first node.

22. A method in a second node used for wireless communication, comprising:
transmitting a first reporting configuration; and
receiving a first CSI set;
wherein the first reporting configuration is applied to the first CSI set; the first reporting configuration is used for determining a first CSI resource group and a first frequency-domain resource, the first CSI resource group comprising at least two CSI resources, and measurement on the first CSI resource group is used for calculating the first CSI set; the first reporting configuration is used for configuring a CSI reporting for the first frequency-domain resource; and for each CSI resource in the first CSI resource group, the first frequency-domain resource comprises at least one PRB that does not belong to PRBs across which the CSI resource passes; and PRBs across which any CSI resource in the first CSI resource group passes are contiguous in a frequency domain.

23. The method according to claim 22, wherein each CSI resource in the first CSI resource group is a CSI-RS resource, and the measurement on the first CSI resource group is channel measurement.

24. The method according to claim 23, wherein the first reporting configuration is used for determining a second CSI resource group, the second CSI resource group comprising a first CSI-IM resource, PRBs occupied by the first CSI-IM resource are contiguous in the frequency domain, and the PRBs occupied by the first CSI-IM resource comprise each PRB in the first frequency-domain resource.

25. The method according to claim 22, wherein each CSI resource in the first CSI resource group is a CSI-IM resource, and the measurement on the first CSI resource group is interference measurement.

26. The method according to claim 25, wherein the first reporting configuration is used for determining a third CSI resource group, the third CSI resource group comprising a first CSI-RS resource, PRBs across which the first CSI-RS resource passes are contiguous in the frequency domain, and the PRBs across which the first CSI-RS resource passes comprise each PRB in the first frequency-domain resource.

27. The method according to any one of claims 22 to 26, wherein PRBs across which any two CSI resources in the first CSI resource group pass do not completely overlap.

28. The method according to any one of claims 22 to 27, comprising:
receiving a first message;
wherein the first message is used for determining that each CSI resource in the first CSI resource group is configured to pass across only part of the PRBs in the first frequency-domain resource, and the first message is used for indicating a capability of a sender of the first CSI set.
